# EUROPEAN PATENT SPECIFICATION

(11) **EP 2 151 358 B1**
(45) Date of publication and mention of the grant of the patent: **07.03.2012**
(21) Application number: 08425555.3
(22) Date of filing: 08.08.2008
(51) Int. Cl.: B60R 21/0134

(54) **Method and device for assisting the driver of a vehicle in identifying obstacles with ultrasound sensors**
Verfahren und Vorrichtung zum Assistieren des Fahrers eines Fahrzeugs bei der Identifizierung von Hindernissen mit Ultraschallsensoren
Procédé et dispositif pour assister le conducteur d'un véhicule en identifiant les obstacles à l'aide de capteurs d'ultrasons

(43) Date of publication of application: 10.02.2010
(73) Proprietor: Iveco S.p.A., 10156 Torino (IT)
(72) Inventor: Vada, Maurizio, 14100 Asti (IT)
(74) Representative: Borsano, Corrado

(56) References cited:
- EP-A- 0 574 925
- DE-A1-102005 021 225
- FR-A- 2 825 052
- US-A1- 2003 141 965
- US-A1- 2008 119 993

## Description

### Field of the invention

The present invention relates to a method and a device for assisting the driver of a vehicle, especially an industrial or commercial vehicle, in identifying obstacles nearby with ultrasound sensors.

### State of the art

There are known technological solutions for assisting the driver of a vehicle in identifying obstacles by means of ultrasound sensors.

Said solutions are not entirely effective in all possible situations where obstacles are present; for instance, they may fail to distinguish between a situation of real risk and one of no risk, or they may fail to provide an effective coverage over a wide area to the front and side of the vehicle.

An example is given in US20080119993, the features of which are in the preamble of claim 1. Another example is given in EP 0 574 925 A2.

The object of the present invention is therefore to indicate a method and a device for assisting the driver of a vehicle, especially an industrial or commercial vehicle, in identifying obstacles nearby with ultrasound sensors, designed to overcome all the above-mentioned drawbacks.

One object of the present invention is a method for assisting the driver of a vehicle, especially an industrial or commercial vehicle, in identifying any obstacles, according to claim 1.

A particular object of the present invention is a method and a device for assisting the driver of a vehicle, especially an industrial or commercial vehicle, in identifying obstacles nearby with ultrasound sensors, as described in more detail in the attached claims that form an integral part of the present description.

### Brief description of the figures

Further objects and advantages of the present invention will become clear from the detailed description that follows of an embodiment of the invention (and variants thereof) and from the attached drawings, given as a non-limiting example, wherein:
figure 1 is a schematic illustration of a vehicle fitted with ultrasound sensors according to the invention;
figures 2, 3 and 4 show diagrams of the operating principle relating to the three monitoring modes implemented according to the invention.

### Detailed description of the invention

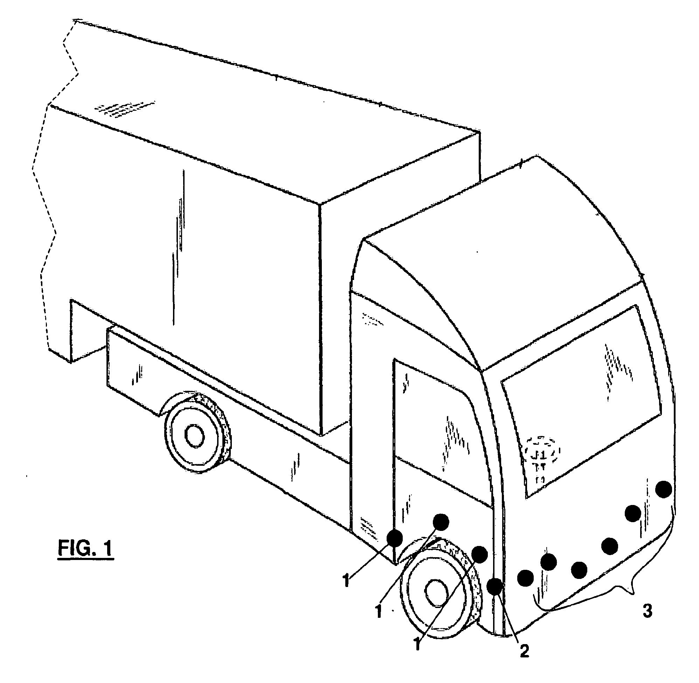

With reference to figure 1, the vehicle is equipped with a set of ultrasound sensors. It is common knowledge that these sensors are capable of establishing the distance from an object encountered by the ultrasound waves that are reflected off the object and returned to the sensors.

In particular, ultrasound sensors 1 are arranged along the rim of the nearside front wheel housing (on the righthand side, for instance), to monitor the area around the forward lateral part of the vehicle.

Another set of ultrasound sensors 3 is installed along the front bumper, designed to monitor the area in front of the vehicle.

Moreover, it least one ultrasound sensor 2 is installed on the nearside front corner of the vehicle corresponding to the so-called "blind spot".

The ultrasound sensors, of a known type, are placed inside suitable holes and fixed so that they face outwards, flush with the surface of the vehicle bodywork, so as to fully exploit the opening angle of the ultrasound beam.

In one, non-limiting embodiment, the sensors are spaced out horizontally no more than 40 cm from one another, to avoid any gaps in the beam, while their height of the ground can be up to approximately 50 cm so that the ultrasound beam reaches ground level within a short distance from the contours of the vehicle.

For instance, there may be six ultrasound sensors 3 on the front, and three sensors 1 on the nearside wheel housing, plus one sensor 2. The physical arrangement of the sensors is thus ideal for ensuring a monitoring of the areas around the front and the forward lateral part of the vehicle, with a continuous, uninterrupted coverage.

A control unit inside the vehicle receives the signals coming from each sensor via a wired or wireless connection.

The control unit inside the vehicle also receives and uses other signals already available, such as an indication of the vehicle's speed, the use of the turn indicator, and the signal coming from the accelerator.

Inside the vehicle, there are also at least two separate acoustic signals (buzzers), one for signalling obstacles in front, and one for obstacles to the side, located respectively in a frontal and lateral position in order to orient the driver, who becomes aware of the actual position of the obstacle from the direction from which the sound originates.

The two acoustic signals may have two different emission frequencies and a variable tone, e.g. that increases in frequency as the vehicle moves closer to the obstacle.

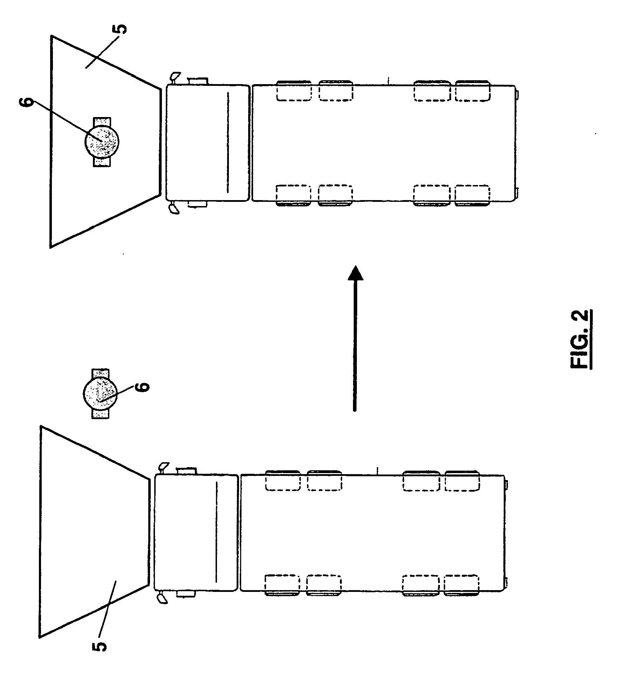

Figures 2, 3 and 4 illustrate the monitoring strategy, which is designed not only to alert the driver to the presence of an obstacle, but also to enable the driver to decide whether it poses a risk or not.

The strategy involves three independent monitoring modes.

### Mode 1 (fig. 2)

The first monitoring mode takes effect on the front part of the vehicle, and up to a distance of 1.8 m from the contours of the vehicle, by enabling the set of sensors 3.

It starts from a condition in which it checks that the vehicle has been at a standstill for at least one second. At regular intervals, it records a "snap shot" of the situation within the ultrasound beam 5 covering the front area, identifying the presence of any obstacle 6. On the vehicle's departure, a condition recognized by processing the signal of pressure brought to bear on the accelerator, the system compares the last situation when the vehicle was at a standstill with the next situation with the vehicle in motion, identifying any difference between the two images. If an obstacle 6 was not there when the vehicle was at a standstill, but subsequently comes within the ultrasound beam when the vehicle moves off, the system recognizes a risk.

If the images change while the vehicle is still at a standstill, then the situation is not identified as a risk. If the obstacle was already there when the vehicle was at a standstill and remains in place when the vehicle departs, the system does not react, because the driver has presumably already become aware of the risk.

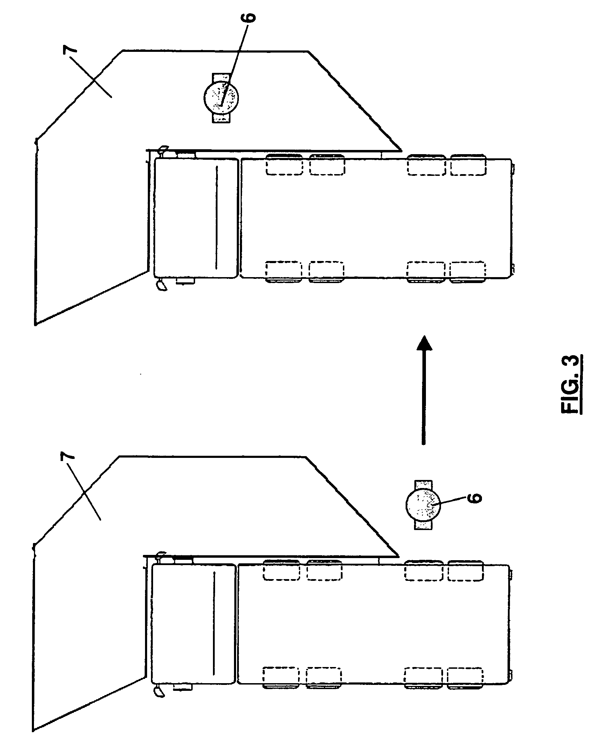

### Mode 2 (fig. 3)

The second monitoring mode is similar to the first, but with the addition of a lateral monitoring area, due to the enabling of all the sensors serving a global area 7 that covers the front and forward lateral part of the vehicle, over a distance of 1.8 m from the contours of the vehicle, without any gaps.

A further condition for this second monitoring mode to be enabled is the use of the turn indicator for the direction corresponding to the nearside of the vehicle, e.g. to signal the driver's intention to turn right. A signal coming from any turning of the steering wheel may also be used as an enabling condition.

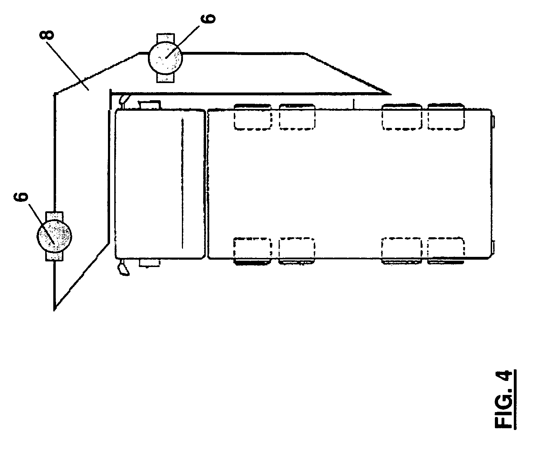

### Mode 3 (fig. 4)

The third monitoring mode differs from the first two. It is used when the vehicle is in motion but at very low speed, e.g. below a threshold value of 10 km per hour. A global area 8 is monitored that covers the front and the forward lateral part of the vehicle, over a narrower maximum distance from the contours of the vehicle than in the previous monitoring modes, i.e. 60 cm in the front and 40 cm to the side, without any gaps.

The type of recording is based not on a comparison between different situations in time, but on the instantaneous identification of the presence of any object within the ultrasound beam, be it at a standstill or in motion.

As explained previously, the ultrasound sensors are capable of establishing the distance of the object so it becomes possible to distinguish between different reaction distances for the above-described three monitoring modes.

Thus, the above-mentioned acoustic signals, or any other (e.g. visual) types of signal, are enabled according to the way in which the presence of an obstacle is identified.

Clearly, the above-described procedures can be implemented with relative ease by suitably programming a control unit installed in the vehicle (that is normally already provided), using programming methods that come within the capabilities of a person skilled in the art.

Thus, the present invention can be advantageously implemented by means of a computer program that comprises coding means for implementing one or more steps in the method, when said program is run on a computer. As a result, it goes without saying that the scope of the invention extends to said computer program and also to any means suitable for reading by a computer that comprise a recorded message, said means for reading by a computer comprising program coding means for implementing one or more steps in the method, when said program is run on a computer.

The device for implementing the procedure also comprises means for remote data transmission by means of aerials, acoustic signals (such as sirens), and visual indicators (such as flashing lights).

From the above description, a person skilled in the art is capable of implementing the object of the invention without adding further structural details.

## Claims

1. A method for assisting the driver of a vehicle, especially an industrial or commercial vehicle, in identifying obstacles, the vehicle comprising:
- turn indicator;
- a first set of ultrasound sensors (1), located on the rim of the nearside front wheel housing, designed to monitor the area around the forward lateral part of the vehicle;
- a second set of ultrasound sensors (3), on the front bumper of the vehicle, designed to monitor the area in front of the vehicle;
the method being **characterised in that** it comprises
- arranging at least one ultrasound sensor (2) on the nearside front corner of the vehicle, designed to monitor the so-called "blind spot" so as the
sensors are placed inside suitable holes and fixed so that they face outwards so that they can monitor the area around the front and the forward lateral part of the vehicle, with a continuous, uninterrupted coverage;
the method further implementing three independent monitoring modes:
- a first monitoring mode covering the area in front of the vehicle, up to a given first distance from the vehicle, by enabling said first set of sensors (1), after the vehicle has been at a standstill for a time, to compare the situation with the vehicle at a standstill with the subsequent situation when it is in motion, and to signal a risk if, when the vehicle begins to move away, an object is identified within said first distance that was not present when the vehicle was at a standstill;
- a second monitoring mode, covering both the areas around the front and the forward lateral part of the vehicle, within said first distance from the vehicle, that enables all said sensors (1, 2, 3) if a turn indicator is enabled for the direction corresponding to the nearside of the vehicle after period of time when the vehicle was at a standstill, to compare the situation with the vehicle at a standstill with the subsequent situation when it is in motion, and to signal a risk if an object is identified within said first distance when the vehicle is in motion that was not present when the vehicle was at a standstill;
- a third monitoring mode covering the area around both the front and the forward lateral part of the vehicle, within at least a second distance from the vehicle that is narrower than said first distance, that enables all said sensors (1, 2, 3) as long as the vehicle moves at a speed lower than a given threshold, and signals a risk if an object comes within said at least one second distance.

2. A method for assisting the driver of a vehicle according to claim 1, wherein no risk is identified while the vehicle is at a standstill.

3. A method for assisting the driver of a vehicle according to claim 1, wherein said signals of risks are in the form of acoustic signals inside the driver's compartment in the vehicle, possibly differing in frequency and tone according to the monitoring mode being implemented.

4. A device for assisting the driver of a vehicle, especially an industrial or commercial vehicle, in identifying obstacles, comprising
- a first set of ultrasound sensors (1), located on the rim of the nearside front wheel housing, designed to monitor the area around the forward lateral part of the vehicle;
- a second set of ultrasound sensors (3), on the front bumper of the vehicle, designed to monitor the area in front of the vehicle;
and **characterised in that** it comprises
- at least one ultrasound sensor (2) on the nearside front corner of the vehicle, designed to monitor the so-called "blind spot" so as the sensors are arranged so that they can monitor the area around the front and the forward lateral part of the vehicle, with a continuous, uninterrupted coverage;
- a control unit configured for implementing the monitoring modes according to claim 1.

5. A device according to claim 4, wherein said control unit is already installed in a vehicle.

6. A computer program that comprises program coding means suitable for implementing the steps of claims 1 to 4 relating to said monitoring modes, when said program is run on a computer.

7. Means suitable for reading with a computer comprising a recorded program, said means suitable for reading with a computer comprising program coding means suitable for implementing the steps of claims 1 to 4 relating to said monitoring modes, when said program is run on a computer.

## Patentansprüche

1. Verfahren zum Unterstützen des Fahrers eines Fahrzeugs, insbesondere eines Industrie- oder Nutzfahrzeugs, beim Identifizieren von Hindernissen, wobei das Fahrzeug umfasst:
- Blinker;
- einen ersten Satz von Ultraschallsensoren (1), der am Rand eines Radkastens des Vorderrads an der Beifahrerseite angeordnet ist und entworfen ist, um das Gebiet um das vordere Seitenteil des Fahrzeugs herum zu überwachen;
- einen zweiten Satz von Ultraschallsensoren (3) an der vorderen Stoßstange des Fahrzeugs, der entworfen ist, um das Gebiet vor dem Fahrzeug zu überwachen;
wobei das Verfahren **dadurch gekennzeichnet ist, dass** es umfasst, dass
- mindestens ein Ultraschallsensor (2) an der vorderen Ecke der Beifahrerseite des Fahrzeugs angeordnet wird, der entworfen ist, um den sogenannten "toten Punkt" zu überwachen, sodass die Sensoren innerhalb geeigneter Löcher platziert und so befestigt werden, dass sie nach außen weisen, sodass sie das Gebiet um die Vorderseite und das vordere Seitenteil des Fahrzeugs herum mit einer durchgehenden, ununterbrochenen Überdeckung überwachen können;
wobei das Verfahren ferner drei unabhängige Überwachungsmodi implementiert:
- einen ersten Überwachungsmodus, der das Gebiet vor dem Fahrzeug bis zu einer vorgegebenen ersten Entfernung zum Fahrzeug abdeckt, indem der erste Satz von Sensoren (1) aktiviert wird, nachdem das Fahrzeug eine Zeit lang gestanden ist, um die Situation mit dem Fahrzeug bei Stillstand mit der nachfolgenden Situation zu vergleichen, wenn es in Bewegung ist, und um ein Risiko zu signalisieren, wenn dann, wenn das Fahrzeug beginnt, sich fortzubewegen, ein Objekt innerhalb des ersten Abstands identifiziert wird, das nicht vorhanden war, als das Fahrzeug gestanden ist;
- einen zweiten Überwachungsmodus, der sowohl die Gebiete um die Vorderseite als auch um das vordere Seitenteil des Fahrzeugs herum innerhalb des ersten Abstands zum Fahrzeug abdeckt, der nach einer Zeitspanne, in der das Fahrzeug gestanden ist, alle Sensoren (1, 2, 3) aktiviert, wenn ein Blinker für die Richtung aktiviert wird, die der Beifahrerseite des Fahrzeugs entspricht, um die Situation mit dem Fahrzeug bei Stillstand mit der nachfolgenden Situation zu vergleichen, wenn es in Bewegung ist, und um ein Risiko zu signalisieren, wenn ein Objekt innerhalb des ersten Abstands
identifiziert wird, wenn das Fahrzeug in Bewegung ist, das nicht vorhanden war, als das Fahrzeug gestanden ist;
- einen dritten Überwachungsmodus, der das Gebiet um sowohl die Vorderseite als auch das vordere Seitenteil des Fahrzeugs herum innerhalb mindestens eines zweiten Abstands zum Fahrzeug abdeckt, der enger als der erste Abstand ist, welcher alle Sensoren (1, 2, 3) aktiviert, solange sich das Fahrzeug mit einer Geschwindigkeit bewegt, die niedriger als ein gegebener Schwellenwert ist, und ein Risiko signalisiert, wenn ein Objekt in den mindestens einen zweiten Abstand kommt.

2. Verfahren zum Unterstützen des Fahrers eines Fahrzeugs nach Anspruch 1,
wobei kein Risiko identifiziert wird, während das Fahrzeug steht.

3. Verfahren zum Unterstützen des Fahrers eines Fahrzeugs nach Anspruch 1,
wobei die Risikosignale in der Form von akustischen Signalen innerhalb des Fahrgastraums im Fahrzeug vorliegen und sich möglicherweise in Übereinstimmung mit dem Überwachungsmodus, der gerade implementiert ist, in der Frequenz und im Ton unterscheiden.

4. Vorrichtung zum Unterstützen des Fahrers eines Fahrzeugs, insbesondere eines Industrie- oder Nutzfahrzeugs, beim Identifizieren von Hindernissen, umfassend:
- einen ersten Satz von Ultraschallsensoren (1), der am Rand eines Radkastens des Vorderrads an der Beifahrerseite angeordnet ist und entworfen ist, um das Gebiet um das vordere Seitenteil des Fahrzeugs herum zu überwachen;
- einen zweiten Satz von Ultraschallsensoren (3) an der vorderen Stoßstange des Fahrzeugs, der entworfen ist, um das Gebiet vor dem Fahrzeug zu überwachen;
und **dadurch gekennzeichnet, dass** sie umfasst
- mindestens einen Ultraschallsensor (2) an der vorderen Ecke der Beifahrerseite des Fahrzeugs, der entworfen ist, um den sogenannten "toten Punkt" zu überwachen, sodass die Sensoren so angeordnet sind, dass sie das Gebiet um die Vorderseite und das vordere Seitenteil des Fahrzeugs herum mit einer durchgehenden, ununterbrochenen Überdeckung überwachen können;
- eine Steuereinheit, die ausgestaltet ist, um die Überwachungsmodi nach Anspruch zu implementieren.

5. Vorrichtung nach Anspruch 4,
wobei die Steuereinheit bereits in einem Fahrzeug installiert ist.

6. Computerprogramm, das ein Programmcodiermittel umfasst, welches geeignet ist, um die Schritte der Ansprüche 1 bis 4 hinsichtlich der Überwachungsmodi zu implementieren, wenn das Programm auf einem Computer laufen gelassen wird.

7. Mittel, das zum Lesen durch einen Computer geeignet ist und ein aufgezeichnetes Programm umfasst, wobei das Mittel, das zum Lesen durch einen Computer geeignet ist, ein Programmcodiermittel umfasst, das geeignet ist, um die Schritte der Ansprüche 1 bis 4 hinsichtlich der Überwachungsmodi zu implementieren, wenn das Programm auf einem Computer laufen gelassen wird.

## Revendications

1. Procédé permettant d'aider le conducteur d'un véhicule, en particulier un véhicule industriel ou commercial, à identifier des obstacles, le véhicule comprenant :
- un indicateur de virage ;
- un premier ensemble de capteurs d'ultrasons (1), situé sur la jante du logement de roue avant côté trottoir, conçu pour surveiller la zone autour de la partie latérale avant du véhicule ;
- un second ensemble de capteurs d'ultrasons (3), sur le pare-chocs avant du véhicule, conçu pour surveiller la zone devant le véhicule ;
le procédé étant **caractérisé en ce qu'**il comprend les étapes consistant à
- disposer au moins un capteur d'ultrasons (2) sur l'angle avant côté trottoir du véhicule, conçu pour surveiller ce que l'on appelle « l'angle mort » de sorte que
les capteurs sont placés à l'intérieur d'orifices adaptés et fixés de façon à faire face vers l'extérieur pour pouvoir surveiller la zone autour de l'avant et de la partie latérale avant du véhicule, avec une couverture continue ininterrompue ;
le procédé mettant en outre en oeuvre trois modes de surveillance indépendants :
- un premier mode de surveillance couvrant la zone devant le véhicule, jusqu'à une première distance donnée du véhicule, en activant ledit premier ensemble de capteurs (1), après que le véhicule a été à l'arrêt pendant un certain temps, pour comparer la situation avec le véhicule à l'arrêt à la situation ultérieure lorsqu'il est en mouvement, et pour signaler un risque si, lorsque le véhicule commence à s'éloigner, un objet qui n'était pas présent lorsque le véhicule était à l'arrêt est identifié dans les limites de ladite première distance ;
- un deuxième mode de surveillance, couvrant à la fois les zones autour de l'avant et de la partie latérale avant du véhicule, dans les limites de ladite première distance du véhicule, qui permet à tous lesdits capteurs (1, 2, 3) si un indicateur de virage est activé pour la direction correspondant au côté trottoir du véhicule après une période de temps pendant laquelle le véhicule a été à l'arrêt, de comparer la situation avec le véhicule à l'arrêt à la situation ultérieure lorsqu'il est en mouvement, et de signaler un risque si un objet qui n'était pas présent lorsque le véhicule était à l'arrêt est identifié dans les limites de ladite première distance lorsque le véhicule est en mouvement ;
- un troisième mode de surveillance couvrant la zone autour à la fois de l'avant et de la partie latérale avant du véhicule, au moins dans les limites d'une seconde distance du véhicule qui est plus petite que ladite première distance, qui active tous lesdits capteurs (1, 2, 3) tant que le véhicule se déplace à une vitesse inférieure à un seuil donné, et signale un risque si un objet se présente dans les limites de ladite au moins une seconde distance.

2. Procédé permettant d'aider le conducteur d'un véhicule selon la revendication 1, dans lequel aucun risque n'est identifié pendant que le véhicule est à l'arrêt.

3. Procédé permettant d'aider le conducteur d'un véhicule selon la revendication 1, dans lequel lesdits signaux de risque se présentent sous la forme de signaux acoustiques à l'intérieur du compartiment du conducteur dans le véhicule, éventuellement de fréquence et de tonalité différentes selon le mode de surveillance mis en oeuvre.

4. Dispositif permettant d'aider le conducteur d'un véhicule, en particulier un véhicule industriel ou commercial, à identifier des obstacles, comprenant
- un premier ensemble de capteurs d'ultrasons (1), situé sur la jante du logement de roue avant côté trottoir, conçu pour surveiller la zone autour de la partie latérale avant du véhicule ;
- un second ensemble de capteurs d'ultrasons (3), sur le pare-chocs avant du véhicule, conçu pour surveiller la zone devant le véhicule ;
et **caractérisé en ce qu'**il comprend
- au moins un capteur d'ultrasons (2) sur l'angle avant côté trottoir du véhicule, conçu pour surveiller ce que l'on appelle « l'angle mort » de sorte que les capteurs sont disposés pour pouvoir surveiller la zone autour de l'avant et de la partie latérale avant du véhicule, avec une couverture continue ininterrompue ;
- une unité de commande configurée pour mettre en oeuvre les modes de surveillance selon la revendication 1.

5. Dispositif selon la revendication 4, dans lequel ladite unité de commande est déjà installée dans un véhicule.

6. Programme informatique qui comprend un moyen de codage de programme adapté pour implémenter les étapes des revendications 1 à 4 relatives auxdits modes de surveillance, lorsque ledit programme est exécuté sur un ordinateur.

7. Moyen adapté permettant de lire avec un ordinateur comprenant un programme enregistré, ledit moyen étant adapté pour être lu avec un ordinateur comprenant un moyen de codage de programme adapté pour implémenter les étapes des revendications 1 à 4 relatives auxdits modes de surveillance, lorsque ledit programme est exécuté sur un ordinateur.
